# EUROPÄISCHE PATENTANMELDUNG

(11) **EP 1 921 360 A1**
(43) Veröffentlichungstag der Anmeldung: **14.05.2008**
(21) Anmeldenummer: 06023088.5
(22) Anmeldetag: 07.11.2006
(51) Int. Cl.: F16K 27/06, D06F 39/08

(54) **Sanitäre Armaturvorrichtung**

(71) Anmelder: Lips, Werner, 8953 Dietikon (CH)
(72) Erfinder: Lips, Werner, 8953 Dietikon (CH)
(74) Vertreter: Schaad, Balass, Menzl & Partner AG

(57) **Zusammenfassung**

Die vorliegende Erfindung betrifft eine sanitäre Armaturvorrichtung (2, 2') zum Anschluss einer zu einer Waschmaschine (32) führenden Speiseleitung (30) umfassend einen Block (8, 8') und ein am Block angeordnetes Ventilelement (10, 10'). Die Oberfläche des Blocks (8, 8') weist einen ersten, eine Einlassseite (12, 12') des Blocks (8, 8') definierenden Flächenabschnitt auf, welcher dazu bestimmt ist, einer das Wasserzuleitungsrohr (4) umfassenden Wand (6) zugewandt zu sein, und welcher Mittel (14) zur Befestigung an das Wasserzuleitungsrohr (4) umfasst. Die Oberfläche des Blocks (8, 8') weist zudem einen im Wesentlichen rechtwinklig zum ersten Flächenabschnitt ausgebildeten zweiten, die Ventiltragseite (18, 18') definierenden Flächenabschnitt auf, an dem das Ventilelement (10, 10') befestigt ist. Von der Einlassseite (12, 12') zur Ventiltragseite (18, 18') führt ein durchgehender, wenigstens annähernd in einer Horizontalebene liegender Kanal (38, 38'), welcher einlassseitig mit den Mitteln (14) zur Befestigung an das Wasserzuleitungsrohr (4) strömungsverbunden ist und ventiltragseitig mit dem Ventilelement (10, 10') strömungsverbunden ist. Das Ventilelement (10, 10') weist eine Betätigungsachse auf, die im Wesentlichen rechtwinklig zum Flächenabschnitt der Ventiltragseite (18, 18') verläuft. Die Armaturvorrichtung (2, 2') umfasst weiter einen Auslass mit Mitteln zur Befestigung der zur Waschmaschine (32) führenden Speiseleitung (30), der nach unten gerichtet ist.

## Beschreibung

Die vorliegende Erfindung betrifft eine sanitäre Armaturvorrichtung zum Anschluss einer zu einer Waschmaschine führenden Speiseleitung gemäss Anspruch 1 und einen Block für eine solche sanitäre Armaturvorrichtung gemäss Anspruch 9.

Die Wasserzufuhr zu einer Waschmaschine wird üblicherweise mittels eines mit einem Wasserzuleitungsrohr verbundenen Ventils gesteuert, an welches eine zur Waschmaschine führende Speiseleitung angeschlossen ist. In der Regel ist das Ventil ein auf- und zudrehbarer Wasserhahn mit einem Einlassstutzen zum Anschliessen des Wasserzuleitungsrohres und einem Auslassstutzen zum Anschliessen der Speiseleitung.

Ein solches Ventil wird üblicherweise direkt an das Wasserzuleitungsrohr angeschlossen und steht rechtwinklig von der die Wasserzuleitung umfassenden Wand ab. Die anzuschliessende Waschmaschine bzw. der die Waschmaschine umfassende Waschturm kann somit nur in einem von der Tiefe des Ventils vorgegebenen Minimalabstand zur Wand aufgestellt werden, was insbesondere im Hinblick auf eine platzsparende Anordnung der Waschmaschine oder des Waschmaschinenturms nachteilig ist.

Zudem ist das Auf- und Zudrehen des Ventils erschwert, da dessen Betätigungsachse nicht zur Bedienungsseite hin ausgerichtet ist, und die Betätigung des Ventils somit nicht von vorne, sondern von der Seite zu erfolgen hat. Wird die Waschmaschine oder der Waschturm aus Platzgründen in ungenügendem Abstand zum Betätigungselement aufgestellt, so ist die Betätigung des Ventils sehr mühsam, da das Betätigungselement nur sehr schlecht gegriffen werden kann.

Diesem Problem könnte damit begegnet werden, dass zwischen der Wasserzuleitung und dem Ventil ein 90°-Rohrbogen angeordnet wird. Dieser erlaubt es, das Ventil derart anzubringen, dass seine Betätigungsachse zur Bedienungsseite hin ausgerichtet ist. Das Ventil ist somit leichter zugänglich und seine Betätigung wird damit vereinfacht.

Allerdings ist der durch das Anordnen des 90°-Rohrbogens vorgegebene Minimalabstand der Waschmaschine zur Wand aufgrund des relativ grossen Radius des 90°-Rohrbogens immer noch beträchtlich, sodass eine platzsparende Anordnung der Waschmaschine auch mit dieser Massnahme nicht möglich ist. Im Weiteren ist ein sauberer Abschluss bei einer solchen Anordnung nur unter grossem Aufwand zu bewerkstelligen.

Aufgabe der vorliegenden Erfindung ist es somit, eine sanitäre Armaturvorrichtung zum Anschliessen einer zu einer Waschmaschine führenden Speiseleitung zur Verfügung zu stellen, welche einfach montiert und betätigt werden kann und welche es gleichzeitig erlaubt, die Waschmaschine in relativ geringem Abstand von der die Wasserzuleitung umfassenden Wand aufzustellen.

Die Aufgabe wird durch den erfindungsgemässen Gegenstand des Anspruchs 1 gelöst. Vorteilhafte Ausführungsformen sind in den abhängigen Ansprüchen definiert.

Als spezifisches Merkmal weist die erfindungsgemässe Armaturvorrichtung einen Block auf. Sie ist somit sehr kompakt ausgestaltet. Aufgrund ihrer durch die Verwendung eines Blockes ermöglichten geringen Breite erlaubt sie eine platzsparende Anordnung der über die Speiseleitung mit ihr verbundenen Waschmaschine bzw. des Waschturms.

Gleichzeitig erlaubt die erfindungsgemässe Armaturvorrichtung eine sehr einfache Betätigung, da im montierten Zustand die Betätigungsachse des Ventilelementes zur Bedienungsseite hin ausgerichtet ist. Von der Bedienungsseite her betrachtet kann das Ventilelement somit sehr einfach von vorne betätigt werden.

Der die Einlassseite definierende Flächenabschnitt liegt im montierten Zustand wenigstens annähernd direkt an der das Wasserzuleitungsrohr umfassenden Wand an und deckt den den Auslass des Wasserzuleitungsrohrs umgebenden Wandbereich ab. Dies gewährleistet eine stabile Montage der Armaturvorrichtung. Insbesondere an nicht exakt verputzten Wandbereichen weist die erfindungsgemässe Armaturvorrichtung auch aus ästhetischen Gesichtspunkten Vorteile auf, da besagte Bereiche von der Armaturvorrichtung verdeckt werden und somit nicht mehr sichtbar sind. Zudem wird die Verletzungsgefahr, die von solchen nicht exakt verputzten Wandbereichen ausgeht, durch das Abdecken mit der erfindungsgemässen Armaturvorrichtung eingedämmt.

Gemäss einer bevorzugten Ausführungsform weist die Einlassseite der Armaturvorrichtung einen Einlassstutzen mit einem Aussengewinde auf, das dazu bestimmt ist, im Wasserzuleitungsrohr eingewindet zu werden. Dies erlaubt es, die erfindungsgemässe Armaturvorrichtung auf einfache Weise stabil und dicht mit dem Wasserzuleitungsrohr zu verbinden. Alternativ zur Einwindung in das Wasserleitungsrohr kann die Verbindung mit der Armaturvorrichtung auch mittels einer einen Dichtring aufweisenden und auf den Einlassstutzen aufgewindeten Überwurfmutter bewerkstelligt werden, wie dies auf diesem Gebiet bekannt ist.

Gemäss einer weiteren bevorzugten Ausführungsform weist der Kanal auf der Ventiltragseite ein Innengewinde auf, in welches das Ventilelement mit einem entsprechenden Aussengewinde eingewindet ist. Dies gewährleistet eine stabile und dichte Befestigung des Ventilelementes am Block.

Um ferner eine stabile und dichte Verbindung zwischen dem Auslass und der Speiseleitung zu gewährleisten, weist der Auslass bevorzugt einen Auslassstutzen mit einem Aussengewinde auf, das dazu bestimmt ist, in die Speiseleitung eingewindet zu werden. Alternativ zur Einwindung in die Speiseleitung kann die Verbindung mit der Armaturvorrichtung auch mittels einer einen Dichtring aufweisenden und auf den Auslassstutzen aufgewindeten Überwurfmutter bewerkstelligt werden, wie dies auf diesem Gebiet bekannt ist.

Im Wesentlichen werden zwei verschiedene Bauweisen der erfindungsgemässen Armaturvorrichtung unterschieden.

Gemäss einer ersten Bauweise umfasst das Ventilelement einen rohrförmigen Teil, in dem ein stationärer Ventilsitz und ein mit diesem zusammenwirkender, mittels eines Betätigungselementes bewegbarer Ventilkörper angeordnet sind und an dem der Auslass ausgebildet ist. Bevorzugt ist der rohrförmige Teil in das Innengewinde eingewindet, um eine stabile und dichte Verbindung zwischen Block und Ventilelement zu gewährleisten.

Gemäss einer zweiten Bauweise der erfindungsgemässen Armaturvorrichtung ist im Kanal des Blocks ein stationärer Ventilsitz angeordnet, der mit einem über ein Betätigungselement bewegbaren Ventilkörper des Ventilelementes zusammenwirkt. Der Auslass ist in dieser Ausführungsform am Block ausgebildet.

Im Weiteren wird bevorzugt, dass der Block im Wesentlichen quaderförmig oder zylinderförmig, insbesondere mit einem achteckigen oder kreisförmigen Querschnitt, ausgebildet ist, da die entsprechenden Ausführungsformen der erfindungsgemässen Armaturvorrichtung nicht nur besonders kompakt, sondern auch ästhetisch reizvoll sind.

Nebst der oben beschriebenen Armaturvorrichtung und ihrer bevorzugten Ausführungsformen betrifft die vorliegende Erfindung auch den Block per se.

Erfindungsgemässe sanitäre Armaturvorrichtungen werden mittels der nachfolgend beschriebenen Zeichnungen im Detail erläutert. Es zeigen rein schematisch:
- Fig. 1: eine Vorderansicht einer erfindungsgemässen sanitären Armaturvorrichtung, die an einer im Querschnitt teilweise dargestellten Wand befestigt ist, und eines daneben aufgestellten Waschturms von der Bedienungsseite her;
- Fig. 2: eine Seitenansicht der in Fig. 1 dargestellten erfindungsgemässen Armaturvorrichtung umfassend einen quaderförmigen Block mit daran angeordnetem Auslass und ein am Block befestigtes Ventilelement;
- Fig. 3: eine Seitenansicht einer weiteren erfindungsgemässen Armaturvorrichtung umfassend einen Block mit daran angeordnetem Auslass und ein am Block befestigtes Ventilelement, wobei der Block kreiszylinderförmig ist;
- Fig. 4: eine Seitenansicht einer weiteren erfindungsgemässen Armaturvorrichtung umfassend einen Block mit daran angeordnetem Auslass und ein am Block befestigtes Ventilelement, wobei der Block zylinderförmig mit achteckigem Querschnitt ist;
- Fig. 5: eine Vorderansicht einer weiteren, ein Ventilelement mit einem rohrförmigen Teil umfassenden erfindungsgemässen Armaturvorrichtung, die an einer im Querschnitt dargestellten Wand befestigt ist, und eines daneben aufgestellten Waschturms von der Bedienungsseite her;
- Fig. 6: eine Seitenansicht der in Fig. 5 dargestellten erfindungsgemässen Armaturvorrichtung umfassend einen quaderförmigen Block und ein am Block befestigtes Ventilelement mit daran angeordnetem Auslass;
- Fig. 7: eine Seitenansicht einer erfindungsgemässen Armaturvorrichtung umfassend einen Block und ein am Block befestigtes Ventilelement mit daran angeordnetem Auslass, wobei der Block kreiszylinderförmig ist; und
- Fig. 8: eine Seitenansicht einer weiteren erfindungsgemässen Armaturvorrichtung umfassend einen Block und ein am Block befestigtes Ventilelement mit daran angeordnetem Auslass, wobei der Block zylinderförmig mit achteckigem Querschnitt ist.

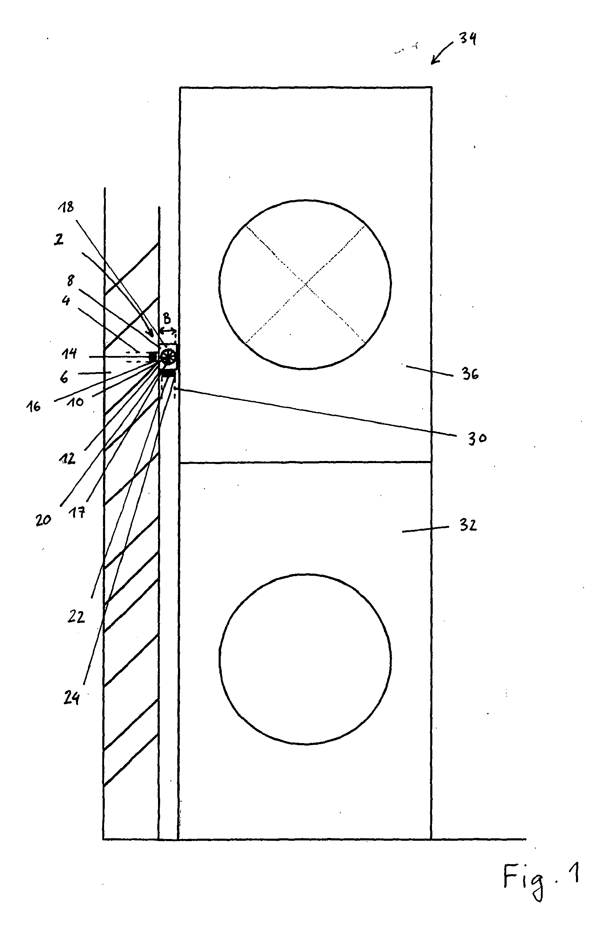

Die in Fig. 1 dargestellte sanitäre Armaturvorrichtung 2 ist an einer ein gestrichelt angedeutetes Wasserzuleitungsrohr 4 umfassenden Wand 6 befestigt und umfasst einen quaderförmigen Block 8 und ein daran befestigtes Ventilelement 10.

Die Oberfläche des Blocks 8 weist einen ersten, die Einlassseite 12 definierenden Flächenabschnitt auf, der über die ganze Fläche auf der Wand 6 aufliegt. Ein vom Block 8 auf der Einlassseite 12 rechtwinklig vorstehender, rohrförmiger Einlassstutzen 14 weist ein Aussengewinde 16 auf, welches in das Wasserzuleitungsrohr 4 eingewindet ist.

Die Oberfläche des Blocks 8 weist weiter einen im Wesentlichen rechtwinklig zur Einlassseite 12 ausgebildeten zweiten, die Ventiltragseite 18 definierenden Flächenabschnitt auf, an dem das Ventilelement 10 befestigt ist. Das Ventilelement 10 weist ein Betätigungselement 17 in Form eines Betätigungsknopfes auf und ist ungefähr in der Mitte der im Aufriss rechteckigen Ventiltragseite 18 angeordnet. Das Ventilelement 10 weist eine Betätigungsachse auf, die rechtwinklig zum Flächenabschnitt der Ventiltragseite 18 verläuft.

Von der Unterseite 20 des Blocks 8 führt vertikal ein Auslassstutzen 22 nach unten. Dieser weist ein Aussengewinde 24 auf, das in eine gestrichelt angedeutete Speiseleitung 30 eingewindet ist. Die Speiseleitung 30 führt zu einer Waschmaschine 32 eines Waschturmes 34, der neben der Wand 6 mit der daran montierten Armaturvorrichtung 2 aufgestellt ist. Nebst der Waschmaschine 32 besteht der Waschturm 34 weiter aus einem Wäschetrockner 36, der derart auf der Waschmaschine angeordnet ist, dass die Seitenwände der Waschmaschine 32 und des Wäschetrockners 36 bündig miteinander verlaufen.

Der Abstand des Waschturmes 34 zur Wand 6 ist geringfügig grösser als die Breite B der sanitären Armaturvorrichtung 2, sodass zwischen der dem Waschturm 34 zuwandten Seite der Armaturvorrichtung 2 und der der Wand 6 bzw. der Armaturvorrichtung 2 zuwandten Seite des Waschturmes 34 nur ein schmaler Spalt ausgebildet ist.

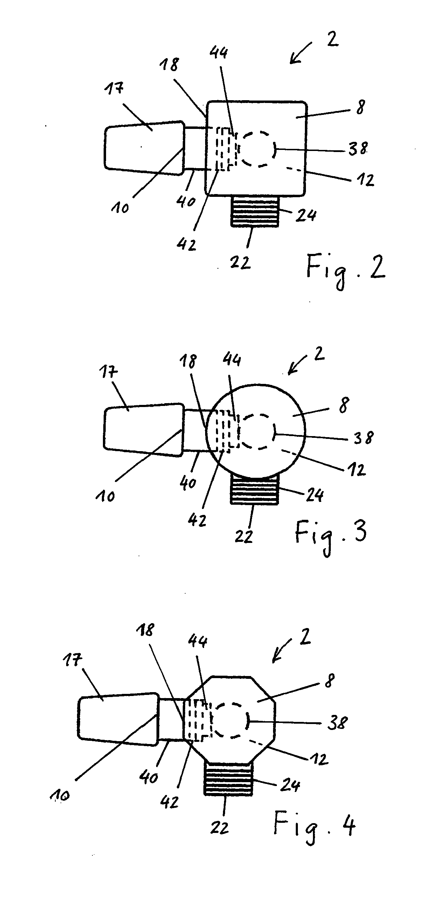

Eine Seitenansicht der in Fig. 1 dargestellten sanitären Armaturvorrichtung 2 ist in Fig. 2 gezeigt. Gemäss Fig. 2 weist die sanitäre Armaturvorrichtung den Block 8 und das Ventilelement 10 auf. Das Ventilelement 10 umfasst einen Schaft 40, der ein gestrichelt angedeutetes Aussengewinde 42 aufweist, das in den Block 8 eingewindet ist. Von der Einlassseite 12 zur Ventiltragseite 18 des Blocks führt ein durchgehender, in einer Horizontalebene liegender und in gestrichelter Linie angedeuteter Kanal 38, welcher einlassseitig mit den Mitteln zur Befestigung des Wasserleitungsrohres strömungsverbunden und ventiltragseitig mit dem Ventilelement 10 strömungsverbunden ist (nicht gezeigt). Das Ventilelement umfasst weiter einen drehbar daran angeordneten, im Wesentlichen konischen Betätigungsknopf 17. Die Betätigungsachse des Ventilelementes 10 verläuft rechtwinklig zum Flächenabschnitt der Ventiltragseite 18.

Mittels des Betätigungsknopfes 17 kann ein Ventilkörper 44 in Axialrichtung bewegt werden, der mit einem am Block 8 ausgebildeten Ventilsitz (nicht gezeigt) zusammenwirkt und somit eine Regulierung des Wasserdurchflusses erlaubt. Weiter ist am Block 8 der rohrförmige Auslassstutzen 22 mit dem Aussengewinde 24 ausgebildet, der bezogen auf die Horizontalebene des Kanals 38 vertikal nach unten gerichtet ist.

Die in Fig. 3 und Fig. 4 gezeigten Ausführungsformen unterscheiden sich von der in Fig. 2 gezeigten Ausführungsform lediglich in der Form des Blocks 8. Dieser ist in der in Fig. 3 gezeigten Ausführungsform kreiszylinderförmig und in der in Fig. 4 gezeigten Ausführungsform zylinderförmig mit achteckigem Querschnitt.

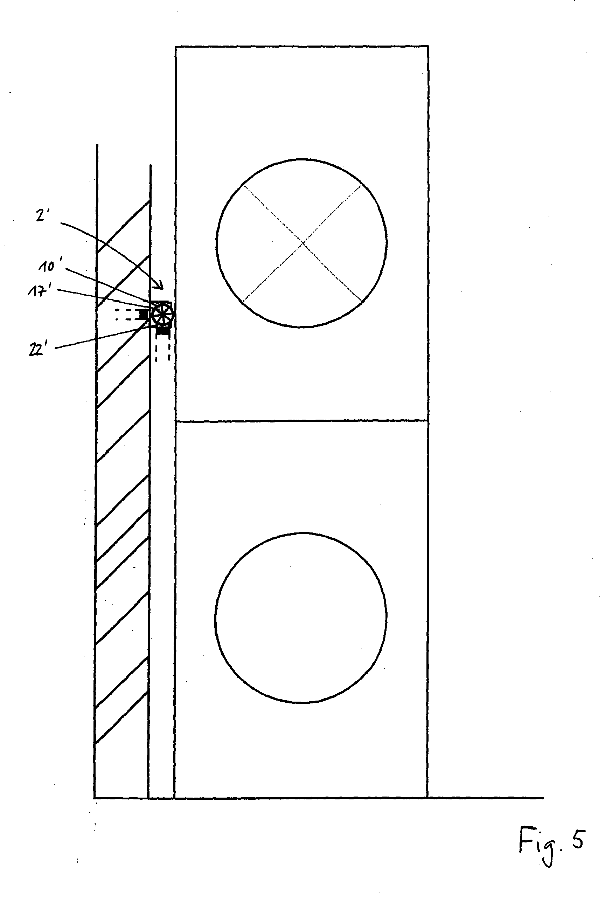

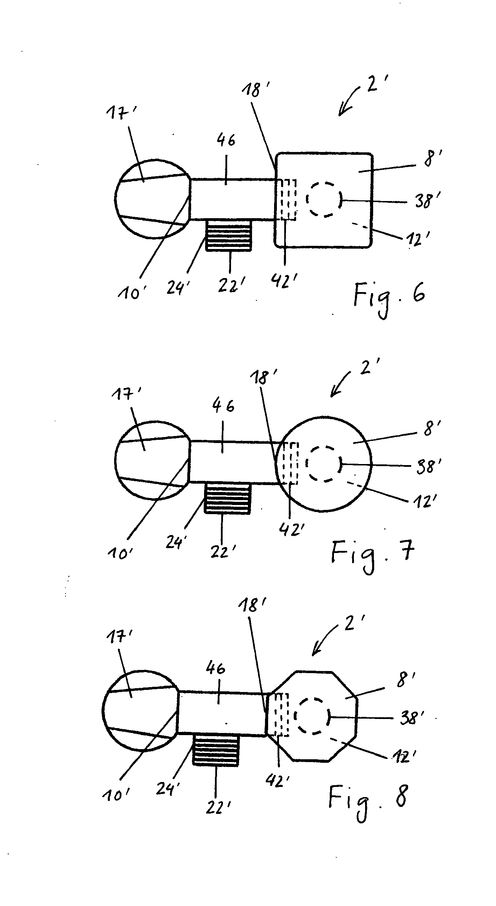

Die in Fig. 5 gezeigte Anordnung entspricht im Wesentlichen der in Fig. 1 gezeigten Anordnung, unterscheidet sich aber in der Bauweise der Armaturvorrichtung. Gemäss Fig. 5 weist die Armaturvorrichtung 2' ein Ventilelement 10' auf, das einen rohrförmigen Teil (siehe Fig. 6) umfasst. Am rohrförmigen Teil ist ein vertikal nach unten führender Auslassstutzen 22' ausgebildet. Das als Betätigungsknopf ausgebildete Betätigungselement 17' weist einen etwas grösseren Durchmesser auf als dasjenige der in Fig. 1 gezeigten Ausführungsform.

Eine Seitenansicht der in Fig. 5 dargestellten sanitären Armaturvorrichtung 2' ist in Fig. 6 gezeigt. Gemäss Fig. 6 weist die sanitäre Armaturvorrichtung 2' einen quaderförmigen Block 8' auf, an dem das Ventilelement 10' in Form eines Standardhahns befestigt ist. Von der Einlassseite 12' zur Ventiltragseite 18' des Blocks führt ein durchgehender, in einer Horizontalebene liegender und in gestrichelter Linie angedeuteter Kanal 38', welcher einlassseitig mit den Mitteln zur Befestigung des Wasserleitungsrohres strömungsverbunden und ventiltragseitig mit dem Ventilelement 10' strömungsverbunden ist (nicht gezeigt). Das Ventilelement 10' umfasst einen rohrförmigen Teil 46, der ein Aussengewinde 42' aufweist, das in den Block 8' eingewindet ist. Das Ventilelement 10' weist weiter einen drehbar daran angeordneten, im Wesentlichen kugelförmig ausgestalteten Betätigungsknopf 17' auf. Die Betätigungsachse des Ventilelementes 10' verläuft im Wesentlichen rechtwinklig zum Flächenabschnitt der Ventiltragseite 18'. Mittels des Betätigungsknopfes 17' kann ein im rohrförmigen Teil 46 angeordneter Ventilkörper (nicht gezeigt) in Axialrichtung bewegt werden, der mit einem ebenfalls im rohrförmigen Teil 46 angeordneten Ventilsitz (nicht gezeigt) zusammenwirkt und somit eine Regulierung des Wasserdurchflusses erlaubt. Weiter ist am rohrförmigen Teil 46 ein Auslassstutzen 22' mit einem Aussengewinde 24' ausgebildet, der bezogen auf die Horizontalebene des Kanals 38' vertikal nach unten gerichtet ist. Der Block 8' der in Fig. 6 gezeigten Ausführungsform ist quaderförmig.

Die in Fig. 7 und Fig. 8 gezeigten Ausführungsformen unterscheiden sich von der in Fig. 6 gezeigten Ausführungsform lediglich in der Form des Blocks 8'. Dieser ist in der in Fig. 7 gezeigten Ausführungsform kreiszylinderförmig und in der in Fig. 8 gezeigten Ausführungsform zylinderförmig mit achteckigem Querschnitt.

In weiteren Ausführungsformen können im Block wahlweise Durchgangslöcher angebracht werden, um mittels weiterer Befestigungsmittel, beispielsweise in die Wand eingewindete Schrauben, eine Verdrehsicherung der Armaturvorrichtung zu bewerkstelligen. Weiter ist denkbar, dass der Kanal zwei rechtwinklig zueinander verlaufende Kanalabschnitte umfasst, deren Horizontalebenen nicht exakt zusammenfallen, solange die Kanalabschnitte einen durchgehenden Kanal bilden.

Die Erfindung umfasst zudem Ausführungsformen, in denen zwei oder drei Auslassstutzen vorgesehen sind, wobei diese von der Betätigungsseite her betrachtet im montierten Zustand wahlweise nach unten, nach oben oder nach hinten gerichtet sind. In diesen Ausführungsformen werden die nicht benötigten Auslassstutzen mit einem Zapfen verschlossen.

Es ist auch denkbar, insbesondere im Falle von zwei oder drei Auslassstutzen, am Block mit Innengewinde versehene Auslässe vorzusehen, in welche der Installateur vor Ort die gewünschten Auslassstutzen und Verschlusszapfen einwinden kann.

Im Allgemeinen ist der Block der erfindungsgemässen Armaturvorrichtung aus Metall, insbesondere aus Buntmetall, oder aus Kunststoff gefertigt.

## Patentansprüche

1. Sanitäre Armaturvorrichtung (2, 2') zum Anschluss einer zu einer Waschmaschine (32) führenden Speiseleitung (30) umfassend einen Block (8, 8') und ein am Block angeordnetes Ventilelement (10, 10'), wobei die Oberfläche des Blocks (8, 8') einen ersten, eine Einlassseite (12, 12') des Blocks (8, 8') definierenden Flächenabschnitt aufweist, welcher dazu bestimmt ist, einer das Wasserzuleitungsrohr (4) umfassenden Wand (6) zugewandt zu sein, und welcher Mittel (14) zur Befestigung an das Wasserzuleitungsrohr (4) umfasst, die Oberfläche des Blocks (8, 8') zudem einen im Wesentlichen rechtwinklig zum ersten Flächenabschnitt ausgebildeten zweiten, die Ventiltragseite (18, 18') definierenden Flächenabschnitt aufweist, an dem das Ventilelement (10, 10') befestigt ist, und von der Einlassseite (12, 12') zur Ventiltragseite (18, 18') ein durchgehender, wenigstens annähernd in einer Horizontalebene liegender Kanal (38, 38') führt, welcher einlassseitig mit den Mitteln (14) zur Befestigung an das Wasserzuleitungsrohr (4) strömungsverbunden ist und ventiltragseitig mit dem Ventilelement (10, 10') strömungsverbunden ist, sowie das Ventilelement (10, 10') eine Betätigungsachse aufweist, die im Wesentlichen rechtwinklig zum Flächenabschnitt der Ventiltragseite (18, 18') verläuft, und die Armaturvorrichtung (2, 2') weiter einen Auslass mit Mitteln zur Befestigung der zur Waschmaschine (32) führenden Speiseleitung (30) umfasst, der nach unten gerichtet ist.

2. Sanitäre Armaturvorrichtung (2, 2') nach Anspruch 1, **dadurch gekennzeichnet, dass** die Einlassseite (12, 12') einen Einlassstutzen (14) mit einem Aussengewinde (16) aufweist, das dazu bestimmt ist, im Wasserzuleitungsrohr (4) eingewindet zu werden.

3. Sanitäre Armaturvorrichtung (2, 2') nach Anspruch 1 oder 2, **dadurch gekennzeichnet, dass** der Kanal (38, 38') auf der Ventiltragseite (18, 18') ein Innengewinde aufweist, in welches das Ventilelement (10, 10') mit einem entsprechenden Aussengewinde (42, 42') eingewindet ist.

4. Sanitäre Armaturvorrichtung (2, 2') nach einem der vorhergehenden Ansprüche, **dadurch gekennzeichnet, dass** der Auslass einen Auslassstutzen (22, 22') mit einem Aussengewinde (24, 24') aufweist, das dazu bestimmt ist, in die Speiseleitung (30) eingewindet zu werden.

5. Sanitäre Armaturvorrichtung (2') nach einem der vorhergehenden Ansprüche, **dadurch gekennzeichnet, dass** das Ventilelement (10') einen rohrförmigen Teil (46) umfasst, in dem ein stationärer Ventilsitz und ein mit diesem zusammenwirkender, mittels eines Betätigungselementes (17') bewegbarer Ventilkörper angeordnet sind und an dem der Auslass ausgebildet ist.

6. Sanitäre Armaturvorrichtung (2') nach Anspruch 3 und 5, **dadurch gekennzeichnet, dass** der rohrförmige Teil (46) in das Innengewinde eingewindet ist.

7. Sanitäre Armaturvorrichtung (2) nach einem der Ansprüche 1 bis 4, **dadurch gekennzeichnet, dass** im Kanal (38) des Blocks (8) ein stationärer Ventilsitz angeordnet ist, der mit einem über ein Betätigungselement (17) bewegbaren Ventilkörper (44) des Ventilelementes (10) zusammenwirkt, und der Auslass am Block (8) ausgebildet ist.

8. Sanitäre Armaturvorrichtung (2, 2') nach einem der vorhergehenden Ansprüche, wobei der Block (8, 8') im Wesentlichen quaderförmig oder zylinderförmig, insbesondere mit einem achteckigen oder kreisförmigen Querschnitt, ausgebildet ist.

9. Block (8, 8') für eine sanitäre Armaturvorrichtung (2, 2') gemäss einem der vorhergehenden Ansprüche.
